# EUROPEAN PATENT SPECIFICATION

(11) **EP 2 220 452 B1**
(45) Date of publication and mention of the grant of the patent: **13.04.2011**
(21) Application number: 08852095.2
(22) Date of filing: 20.11.2008
(51) Int. Cl.: F28D 15/02, F01N 5/02

(54) **HEAT PIPE, EXHAUST HEAT RECOVERER PROVIDED THEREWITH**
WÄRMEROHR, DAMIT VERSEHENE ABGASRÜCKGEWINNUNGSVORRICHTUNG
CALODUC, RÉCUPÉRATEUR DE CHALEUR D'ÉCHAPPEMENT LE COMPORTANT

(30) Priority: 21.11.2007 JP 2007301577
(43) Date of publication of application: 25.08.2010
(73) Proprietor: Toyota Jidosha Kabushiki Kaisha, Toyota-shi, Aichi-ken 471-8571 (JP)
(72) Inventor: MABUCHI, Tomoki, Toyota-shi Aichi-ken 471-8571 (JP); TOI, Masao, Toyota-shi Aichi-ken 471-8571 (JP); TOKI, Hiroyuki, Toyota-shi Aichi-ken 471-8571 (JP)
(74) Representative: Albutt, Anthony John
(86) International application number: PCT/IB2008/003563
(87) International publication number: WO 2009/066177

(56) References cited:
- EP-A- 1 801 531
- DE-A1-102006 015 379
- DE-A1-102007 015 533

## Description

### BACKGROUND OF THE INVENTION

### 1. Field of the Invention

The invention relates to a heat pipe used in a vehicle such as an automobile, an exhaust heat recoverer provided therewith.

### 2. Description of the Related Art

A conventional example of the related art uses the principle of a heat pipe to recover exhaust heat of exhaust gas discharged from an engine of a vehicle and use this exhaust heat to promote engine warming and the like.

In addition, a loop heat pipe heat exchanger has been proposed that utilizes the principle of a heat pipe (see, for example, Japanese Patent Application Publication No. 4-45393 (JP-A-4-45393)). This heat exchanger has a closed circulation path that forms a closed loop, a working fluid charged into the circulation path enabling evaporation and condensation, an evaporation unit arranged in the circulation path that evaporates the working fluid by introducing heat from the outside, and a condensation unit arranged at a higher location than the evaporation unit of the circulation path that carries out heat exchange between the working fluid evaporated in the evaporation unit and a heat transfer fluid from the outside. EP 1801531 discloses a heat pipe according to the preamble of claim 1.

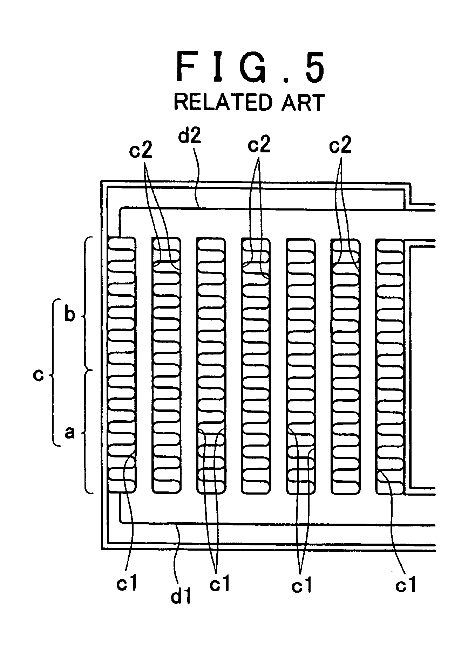

However, in order to install on a vehicle, the structure of an exhaust heat recoverer is required to be compactly designed. Consequently, in the case of using a loop heat pipe heat exchanger as an exhaust heat recoverer, a configuration is preferably employed as shown in FIG 5 having a plurality of heat pipes c, a heating unit a that heats a working fluid using the heat of exhaust gas, and an evaporation unit b that evaporates the working fluid heated by this heating unit a using the heat of exhaust gas, arranged in parallel in the horizontal direction, and headers d1 and d2 (connecting portions) respectively connecting both ends in the vertical direction of each heat pipe c. In this case, the header d2 on the side of the evaporation unit b of each heat pipe c (top of FIG 5) is connected to a condensation unit so that the evaporated working fluid is subjected to heat exchange with a target of promotion of warming, while the header d1 on the side of the heating unit a of each heat pipe c (bottom of FIG 5) is connected to the condensation unit so that working fluid that has been condensed by heat exchange with the target of promotion of warming is returned.

However, an exhaust heat recoverer configured in this manner still has the problems described below. Namely, since the heat pipes c employ the same shape for the heating unit a side thereof and the evaporation unit b side thereof, or in other words, a heat pipe portion c1 on the side of the heating unit and a heat pipe portion c2 on the side of the evaporation unit mutually form a pair and are formed to the same shape, when working fluid heated in the heat pipe portion c1 on the heating unit side is transformed to a vapor phase and expands in volume during evaporation in the heat pipe section c2 on the side of the evaporation unit, the pressure of the working fluid increases accompanying this expansion in volume, and causing the working fluid to be sent to the condensation unit by passing through the inside of the heat pipe section c2 on the evaporation unit side at a rapid flow rate. Consequently, despite the vapor phase working fluid evaporated in the heat pipe section c2 on the side of the evaporator being exposed to heat of the exhaust gas, the heat of the exhaust gas has difficulty in acting on the vapor phase working fluid, thereby preventing the vapor phase working fluid in the heat pipe portion c2 on the side of the evaporation unit from being reheated by heat from the exhaust gas. As a result, during cold starting and the like when promotion of warming is particularly required, heat of the working fluid is lost directly as a result of the vapor phase working fluid contacting, for example, the cold peripheral walls of the condensation unit, thereby preventing heat exchange with the target of promotion of warming from being carried out efficiently.

### SUMMARY OF THE INVENTION

The invention provides a heat pipe capable of enabling heat exchange with a target of promotion of warming, such as during cold starting, to be carried out efficiently by adequately reheating an evaporated, vapor phase working fluid using heat of exhaust gas, an exhaust heat recoverer provided therewith.

A first aspect of the invention relates to a heat pipe provided with a heating unit that is provided with a heating unit side heat pipe portion that heats a working fluid using heat of exhaust gas discharged from an engine, an evaporation unit that is provided with an evaporation unit side heat pipe portion through which the working fluid flows, and that evaporates the working fluid heated by the heating unit using the heat of the exhaust gas, and flow rate retardation means for retarding the flow rate of the working fluid flowing into the evaporation unit side heat pipe portion.

In the heat pipe according to this first aspect, the heating unit side heat pipe portion is provided in plurality, and the flow rate retardation means is provided with a merging portion that merges the working fluid respectively heated by the plurality of heating unit side heat pipe portions, on the evaporation unit side.

As a result of employing this configuration, the working fluid merged from a heating unit side heat pipe portion is retained in the merging portion resulting in retardation of the flow rate thereof. As a result, the heat of exhaust gas is able to easily act on the working fluid for which the flow rate thereof has been retarded in the merging portion on the side of the evaporation unit, thereby enabling vapor phase working fluid evaporated in the merging portion on the side of the evaporation unit to be adequately reheated by the heat of exhaust gas to ensure an adequate amount of heat. As a result, during cold starting and the like during which promotion of warming is particularly required, the direct loss of heat by the vapor phase working fluid caused by contact with the peripheral walls of the condensation unit and the like is avoided, thereby enabling heat exchange with a target of promotion of warming to be carried out efficiently.

In the heat pipe according to this first aspect, the cross-sectional area of a flow path orthogonal to the vertical direction of the merging portion may be set to be larger than the cross-sectional area of a flow path orthogonal to the vertical direction of the plurality of evaporation unit side heat pipe portions. According to this configuration, the working fluid that has merged from each evaporation unit side heat pipe portion into the wide merging portion is reliably acted on by the heat of exhaust gas retained in the merging portion on the side of the evaporation unit. As a result, the vapor phase working fluid evaporated in the merging portion on the side of the evaporation unit is adequately reheated by the heat of exhaust gas to ensure an adequate amount of heat.

In addition, in the heat pipe according to this first aspect, the cross-sectional area of a flow path orthogonal to the vertical direction of the merging portion may be set to be larger than the cross-sectional area of a flow path orthogonal to the vertical direction of the evaporation unit side heat pipe portion. According to this configuration, the working fluid that has merged from each heating unit side heat pipe portion into the merging portion resists being rapidly introduced into the evaporation unit side heat pipe portion having a small flow path cross-sectional area. Consequently, the flow rate of the working fluid that has merged from each heating unit side heat pipe portion temporarily decreases in the merging portion, and the heat of exhaust gas reliably acts on the working fluid for which the flow rate thereof has decreased in this merging portion. As a result, the vapor phase working fluid evaporated in the merging portion on the side of the evaporation unit is adequately reheated by the heat of exhaust gas to ensure an adequate amount of heat.

In addition, the heat pipe according to this first aspect may be provided with throttling means which is provided between the merging portion and the evaporation unit side heat pipe portion and which restricts the cross-sectional area of the flow path orthogonal to the vertical direction. According to this configuration, the working fluid that has merged from each heating unit side heat pipe portion into the merging portion further resists being introduced into the evaporation unit side heat pipe portion having a restricted cross-sectional area for the flow path. Consequently, the flow rate of the working fluid that has merged from each heating unit side heat pipe portion into the merging portion further decreases, and the heat of exhaust gas acts even more reliably on the working fluid for which the flow rate thereof has further decreased in this merging portion. As a result, the vapor phase working fluid evaporated in the merging portion on the side of the evaporation unit is adequately reheated by the heat of exhaust gas to ensure an adequate amount of heat.

Moreover, the heat pipe according to this first aspect may be provided near the center of the exhaust pipe. According to this configuration, the heat of exhaust gas near the center of the exhaust pipe where the temperature within the exhaust pipe is the highest acts on the working fluid inside the merging portion, and the heat of exhaust gas is efficiently imparted to the working fluid retained in the merging portion. As a result, the vapor phase working fluid evaporated in the merging portion on the side of the evaporation unit is efficiently heated by the heat of high-temperature exhaust gas near the center of the exhaust pipe to ensure an adequate amount of heat.

In the heat pipe according to this first aspect, the cross-section of the merging portion orthogonal to the direction of flow of the exhaust gas may be in the shape of a semicircular arc.

In the heat pipe according to this first aspect, the working fluid further heated by the evaporation unit may be a vapor phase working fluid.

In the heat pipe according to this first aspect, the evaporation unit may be arranged higher than the heating unit in the vertical direction.

In summary of that described above, by retarding the flow rate of the working fluid with flow rate retardation means provided with a merging portion and the like that merges the working fluid heated in each heating unit side heat pipe portion of the heat pipe on the side of the evaporation unit, the heat of exhaust gas easily acts on the working fluid for which the flow rate thereof has been retarded in the merging portion on the side of the evaporation unit, thereby ensuring an adequate amount of heat for the vapor phase working fluid, and making it possible to efficiently carry out heat exchange with a target of promotion of warming by avoiding the heat of the vapor phase working fluid being lost directly due to contact with the cold peripheral walls and the like of the condensation unit, particularly during cold starting when promotion of warming is required.

A second aspect of the invention relates to an exhaust heat recoverer that is provided with the heat pipe according to the first aspect, and a condensation unit into which is introduced the working fluid evaporated in the evaporation unit and in which the introduced working fluid is cooled.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 is a perspective view showing an exhaust heat recoverer as claimed in a first embodiment of the invention applied to an exhaust pipe of an automobile;
FIG. 2 is a longitudinal cross-sectional side view of the same exhaust heat recoverer applied to the exhaust pipe of an automobile;
FIG. 3 is a longitudinal cross-sectional front view of the same exhaust heat recoverer as viewed from the axial direction of an exhaust pipe;
FIG. 4 is a longitudinal cross-sectional front view of an exhaust heat recoverer as claimed in a second embodiment of the invention as viewed from the axial direction of an exhaust pipe; and
FIG. 5 is a longitudinal cross-sectional front view of an exhaust heat recoverer as claimed in the related art as viewed from the axial direction of an exhaust pipe.

### DETAILED DESCRIPTION OF EMBODIMENTS

The following provides an explanation of a mode for carrying out the invention based on the drawings.

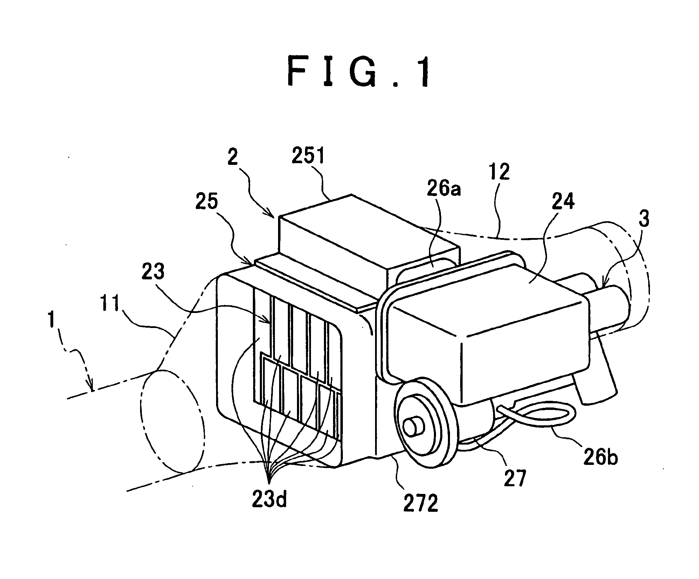

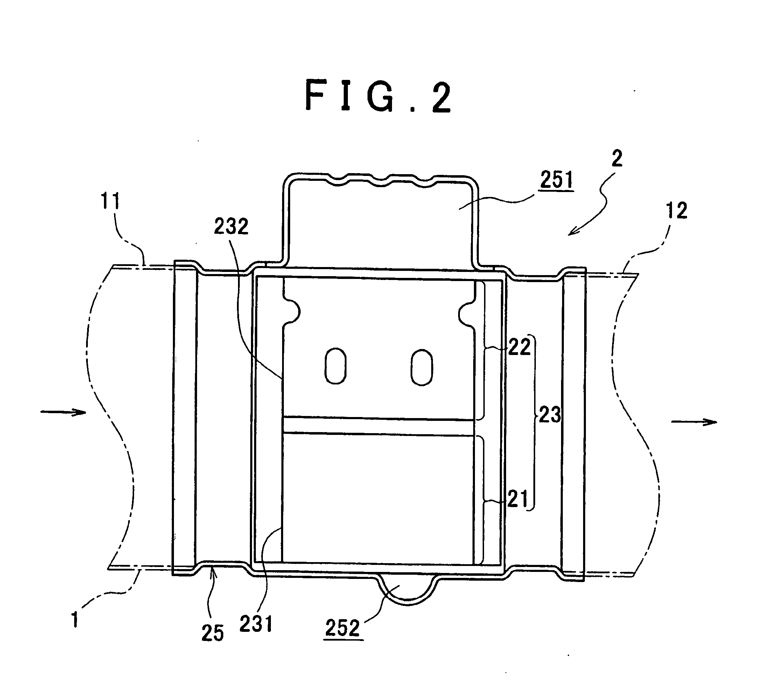

FIGS. 1 and 2 show an exhaust pipe of an automobile in which is applied an exhaust heat recoverer as claimed in a first embodiment of the invention, and an exhaust heat recoverer 2 is provided at an intermediate location in this exhaust pipe 1. More specifically, the exhaust pipe 1 is divided at the exhaust gas recoverer 2 into an upstream exhaust pipe path 11 and a downstream exhaust pipe path 12, and while the upstream side in the direction of exhaust gas flow of an evaporation side case 25 (to be described later) of the exhaust heat recoverer 2 is connected to the upstream exhaust pipe path 11, the downstream side in the direction of exhaust gas flow of the evaporation side case 25 is connected to the downstream side exhaust pipe path 12. In addition, a catalytic converter is provided on the upstream side of the upstream side exhaust pipe path 11 (farther upstream than the exhaust heat recoverer 2). On the other hand, a muffler is provided on the downstream side of the downstream side exhaust pipe path 12 (farther downstream than the exhaust heat recoverer 2).

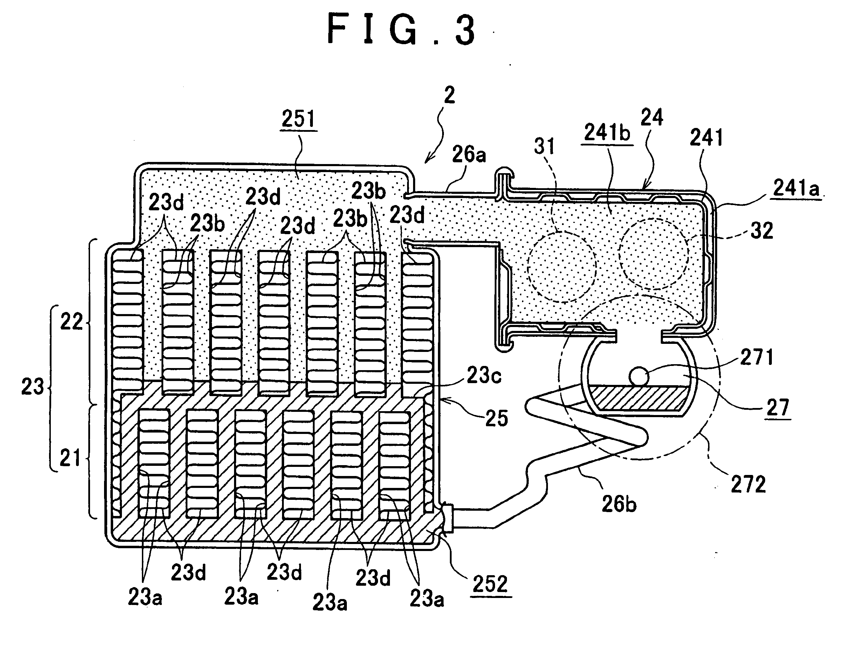

In addition, as shown in FIG 3, the exhaust heat recoverer 2 is provided with a heat pipe 23 having a heating unit 21 and an evaporation unit 22, and a condensation unit 24.

The heat pipe 23 allows the passage there through of a working fluid in the form of pure water, and is housed within the evaporation side case 25 roughly in the shape of a rectangular frame. The central portion of the evaporation side case 25 in which this heat pipe 23 is located is arranged so as to face the inside of the exhaust pipe 1. The heat pipe 23 is provided with a plurality of heating unit side heat pipe portions 23a on the side of the heating unit 21 that heats pure water with the heat of the exhaust gas (bottom of FIG 3), and a plurality of evaporation unit side heat pipe portions 23b on the side of the evaporation unit 22 that evaporates the pure water heated by the heating unit side heat pipe portions 23a (top of FIG 3). The heat pipe 23 carries out heat exchange between the pure water flowing through the inside of each heating unit side heat pipe portion 23a and each evaporation unit side heat pipe portion 23b and exhaust gas present within the exhaust pipe 1 discharged from an engine, thereby heating and evaporating the pure water. In this case, each heating unit side heat pipe portion 23a and each evaporation unit side heat pipe portion 23b has a prescribed length (of about, for example, 60 mm) in the direction of flow of the exhaust gas flowing through the exhaust pipe 1, and are provided extending in the vertical direction at prescribed intervals in the left and right directions, respectively, on the side of the heating unit 21 and the side of the evaporation unit 22 within the evaporation side case 25.

The condensation unit 24 has the shape of an enclosed tank, and is arranged outside the exhaust pipe 1. An inlet port 31 and an outlet port 32 of a cooling water path 3, which circulates engine cooling water of an automobile, are connected to the condensation unit 24. In addition, the condensation unit 24 and the evaporation side case 25 are linked through upper and lower communication paths 26a and 26b, and vapor phase pure water, or water vapor, evaporated by the heat pipe 23 of the evaporation side cas 25- (heating unit side heat pipe portions 23a and evaporation unit side heat pipe portions 23b), is introduced into the condensation unit 24 through the upper communication path 26a. A water vapor layer 251, where water vapor evaporated by the heat pipe 23 merges, is provided in the upper end of the evaporation side case 25, and an upper end of each evaporation unit side heat pipe portion 23b of the heat pipe 23 is fit and inserted into the lower surface of this water vapor layer 251. On the other hand, an intake portion 252, into which liquid phase pure water accumulated in a reservoir portion 27 to be described later is introduced, is provided in the lower end of the evaporation side case 25, and the lower end of each heating unit side heat pipe portion 23a of the heat pipe 23 is fit and inserted into the upper surface of this intake portion 252. Although the upper communication path 26a is connected between the water vapor layer 251 of the evaporation side case 25 and the condensation unit 24, the lower communication path 26b is connected between the intake portion 252 of the evaporation side case 25 and the reservoir portion 27 (to be described later). In this case, each heating unit side heat pipe portion 23a and each evaporation unit side heat pipe portion 23b are formed to respectively have the same diameter.

The condensation unit 24 is divided into a two-layer structure by a partition 241, and carries out heat exchange between engine cooling water, introduced from the inlet port 31 of the cooling water path 3 on the side of an outer layer 241a to the outside of this partition 241, and water vapor introduced from the water vapor layer 251 on the side of an inner layer 241b to the inside of the partition 241, thereby resulting in condensation of water vapor from which heat has been lost due to heat exchange with the engine cooling water from the vapor phase to the liquid phase of pure water. Engine cooling water that has undergone heat exchange with water vapor in the condensation unit 24 flows out from the side of the outer layer 241a of the condensation unit 24 through the outlet port 32 of the cooling water path 3. In this case, the inlet port 31 of the cooling water path 3 is located on the side of the water vapor layer 251 on the side of the outer layer 241a of the condensation unit 24, and heat of the high-temperature water vapor immediately after being introduced from the water vapor layer 251 is imparted thereto.

On the other hand, the reservoir portion 27 is provided on the lower surface of the condensation unit 24, and pure water that has entered the liquid phase as a result of heat exchange with engine cooling water in the condensation unit 24 moves from the condensation unit 24 into the reservoir portion 27 and is accumulated therein. Liquid phase pure water that has accumulated in the reservoir portion 27 is returned to the evaporation side case 25 through the lower communication path 26b. In addition, a valve 271 for controlling the return the return of liquid phase pure water to the reservoir portion 27 in the lower portion of the evaporation side case 25 is provided at the connection with the lower communication path 26b of the reservoir portion 27. This valve 271 is opened and closed by an operating portion 272 activated by negative pressure from the engine side, and as a result of being closed by the operation of the operating portion 272 such as at completion of warming when heat exchange with engine cooling water in the condensation unit 24 is no longer required, the movement of the pure water (water vapor) is controlled to allow the heat load to dissipate to a radiator. In this case, the pure water used for the working fluid of the exhaust heat recoverer 2 is sealed while maintaining a vacuum (reduced pressure) in the heat pipe 23 (heating unit side heat pipe portions 23a and evaporation unit side heat pipe portions 23b), the condensation unit 24, the reservoir portion 27 and the upper and lower communication paths 26a and 26b. In addition, the heat pipe 23, condensation unit 24, reservoir portion 27 and upper and lower communication paths 26a and 26b are composed of stainless steel having high resistance to corrosion.

Flow rate retardation means 4 for retarding the flow rate of vapor phase pure water (water vapor) flowing in the form of water vapor through each of the evaporation unit side heat pipe portions 23b, is provided on the side of the evaporation unit 22 of the heat pipe 23. This flow rate retardation means 24 is provided with a merging portion 23c that merges pure water respectively heated by each heating unit side heat pipe portion 23a on the side of the evaporation unit 22. The upper end of each heating unit side heat pipe portion 23a is respectively connected to the lower end of this merging portion 23c. The lower end of each evaporation unit side heat pipe portion 23b is respectively connected to the upper end of the merging portion 23c located between mutually adjacent heating unit side heat pipe portions 23a, and is connected to the lower end of the water vapor phase 251 by extending upward in the vertical direction. In addition, corrugated fins 23d are joined between the evaporation side case 25 and the heating unit side heat pipe portions 23a and the evaporation unit side heat pipe portions 23b adjacent thereto, between mutually adjacent heating unit side heat pipe portions 23a, and between mutually adjacent evaporation unit side heat pipe portions 23b, and the corrugated fins 23d promote heat exchange between pure water and exhaust gas by increasing the heat transfer areas of the evaporation unit side and heating unit side heat pipe portions 23a and 23b. The merging portion 23c is provided extending in roughly the horizontal direction (roughly horizontal direction orthogonal to the axis of the exhaust pipe) near the center of the exhaust pipe 1. In this case, the diagonal lines shown in FIG 3 indicate liquid phase pure water, while the dots indicate water vapor (vapor phase pure water). Furthermore, the merging portion 23c not only merges pure water heated within each of the heating unit side heat pipe portions 23a, but rather when heat exchange with pure water is promoted due to increase in the amount of heat of the exhaust gas, also merges water vapor evaporated as a result of heating proceeding to the inside of each of the heating unit side heat pipe portions 23a.

In addition, the merging portion 23c on the side of the evaporation unit 22 is set to have a flow path cross-sectional area larger than the flow path cross-sectional area in each heating unit side heat pipe portion 23a. In other words, in contrast to seven heating unit side heat pipe portions 23a being arranged in the horizontal direction orthogonal to the direction of flow of exhaust gas, merging portion 23c is continuously provided extending between heating unit side heat pipe portions 23a on one side in the horizontal direction orthogonal to the direction of flow of exhaust gas (left edge of FIG. 3) and heating unit side heat pipe portions 23a on the other side in the horizontal direction orthogonal to the direction of flow of exhaust gas (right edge of FIG 3), and as a result thereof, the cross-sectional area of the flow path orthogonal to the vertical direction of the merging portion 23c is set to be larger than the total cross-sectional area of the flow paths orthogonal to the vertical direction of each heating unit side heat pipe portion 23a of which seven are intermittently provided in the horizontal direction orthogonal to the direction of flow of exhaust gas.

On the other hand, the merging portion 23c on the side of the evaporation unit 22 is set to have a flow path cross-sectional area larger than the flow path cross-sectional area of each evaporation unit side heat pipe portion 23b. In other words, six evaporation unit side heat pipe portions 23b are arranged in the horizontal direction orthogonal to the direction of flow of exhaust gas, and as a result thereof, the flow path cross-sectional area of the merging portion 23c continuously provided extending between the heating unit side heat pipe portions 23a on both one side and the other side in the horizontal direction orthogonal to the direction of flow of exhaust gas is set to be larger than the total flow path cross-sectional area of each evaporation unit side heat pipe portion 23b of which six are intermittently provided in the horizontal direction orthogonal to the direction of flow of exhaust gas. The total cross-sectional area of flow paths orthogonal to the vertical direction of each of the heating unit side heat pipe portions 23a is set to be larger than the total cross-sectional area of flow paths orthogonal to the vertical direction of each of the evaporation unit side heat pipe portions 23b.

In this case, the lower end of each heating unit side heat pipe portion 23a is respectively connected to the intake portion 252 on the lower end of the evaporation side case 25, and the upper end thereof is connected to the lower end of the merging portion 23c by extending upward in the vertical direction. On the other hand, the lower end of each evaporation unit side heat pipe portion 23b is respectively connected to the merging portion 23c located between mutually adjacent heating unit side heat pipe portions 23a, and the upper end thereof is connected to the lower end of the water vapor phase 251 on the upper end of the evaporation side case 25 by extending upward in the vertical direction.

Thus, in the above-mentioned first embodiment, the heat pipe 23 causes the flow rate of pure water flowing through each of the heating unit side heat pipe portions 23a to be retarded in the merging portion 23c on the side of the evaporation unit 22 by the flow rate retardation means 4 provided with the merging portion 23c that merges pure water respectively heated by the seven heating unit side heat pipe portions 23a on the side of the heating unit 21 to the side of the evaporation unit 22. This is carried out to retard the flow rate of pure water merged from each of the heating unit side heat pipe portions 23a by retaining in the merging portion 23c having a large flow path cross-sectional area by causing pure water heated by each heating unit side heat pipe portion 23a to merge into the merging portion 23c on the side of the evaporation unit 22. Moreover, since the flow path cross-sectional area of the merging portion 23c is provided to be larger than the flow path cross-sectional area of each evaporation unit side heat pipe portion 23b, pure water that has merged from each heating unit side heat pipe portion 23a into the merging portion 23c resists being rapidly introduced into each evaporation unit side heat pipe portion 23b having a small flow path cross-sectional area, thereby causing the flow rate of pure water to temporarily decrease in the merging portion 23c. As a result, the heat of exhaust gas easily acts on pure water for which the flow rate thereof has been retarded in the merging portion 23c on the side of the evaporation unit 22, and water vapor (vapor phase pure water) evaporated in the merging portion 23c on the side of the evaporation unit 22 is adequately reheated by the heat of the exhaust gas, thereby ensuring an adequate amount of heat. As a result, heat exchange with engine cooling water can be carried out efficiently by avoiding the heat of the water vapor being lost directly due to contact with the cold partition 241 and the like of the condensation unit 24, particularly during cold starting when promotion of warming is required.

In addition, since the merging portion 23c of the evaporation unit 22 is provided extending in the horizontal direction near the center of the exhaust pipe 1, the heat of the exhaust gas that reaches the highest temperature near the center of the exhaust pipe 1 can be efficiently imparted to the pure water retained in the merging portion 23c, which is extremely advantageous in terms of improving the efficiency of heat exchange with engine cooling water.

Moreover, since the total flow path circumferential cross-sectional area of each of the heating unit side heat pipe portions 23a is set to be larger than the total flow path circumferential cross-sectional area of each of the evaporation unit side heat pipe portions 23b, the heat of exhaust gas aggressively and effectively acts on liquid phase pure water in each of the heating unit side heat pipe portions 23a due to the large flow path circumferential cross-sectional area thereof, thereby making it possible to efficiently heat the liquid phase pure water in each of the heating unit side heat pipe portions 23a.

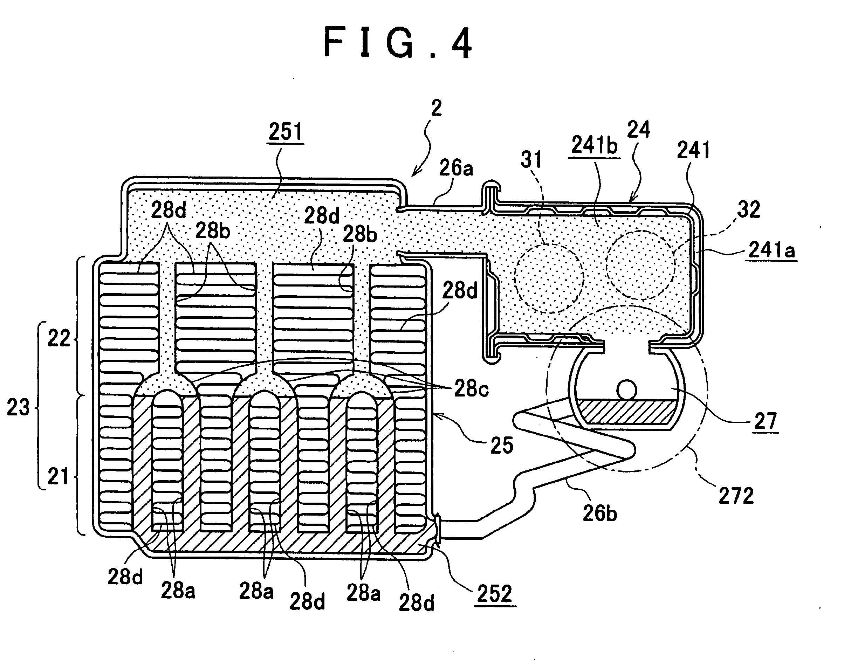

Next, an explanation is provided of a second embodiment of the invention based on FIG 4.

A different configuration is employed for the heat pipe in this second embodiment. Furthermore, other constituents with the exception of the heat pipe are the same as in the case of the above-mentioned first embodiment, like reference numerals are used to indicate like constituents, and a detailed explanation thereof is omitted.

Namely, in this second embodiment, a heat pipe 28 allows the flow of a working fluid in the form of pure water there through, and is housed within the evaporation side case 25 in the shape of a rectangular frame. A central portion of the evaporation side case 25 in which this heat pipe 28 is located is arranged so as to face an inside of the exhaust pipe 1. The heat pipe 28 is provided with a plurality of heating unit side heat pipe portions 28a on the side of the heating unit 21 (bottom of FIG 4) that heats pure water with heat of exhaust gas, and a plurality of evaporation unit side heat pipe portions 28b on the side of the evaporation unit 22 (top of FIG 4) that evaporates pure water heated by the heating unit side heat pipe portions 28a. This heat pipe 28 carries out heat exchange between pure water flowing through the inside of each heating unit side heat pipe portion 28a and each evaporation unit side heat pipe portion 28b, and exhaust gas discharged from an engine, thereby evaporating the pure water by heating In this case, each of the heating unit side heat pipe portions 28a and each of the evaporation unit side heat pipe portions 28b are provided within the evaporation side case 25 extending in the vertical direction at prescribed intervals in the left and right directions, respectively.

The heat pipe 28 is provided with flow rate retardation means 5 for retarding the flow rate of vapor phase pure water (water vapor) flowing in the form of water vapor through each of the evaporation unit side heat pipe portions 28b. This flow rate retardation means 5 is provided with merging portions 28c having a roughly semi-circular cross-section orthogonal to the direction of flow of the exhaust gas that cause pure water respectively heated by each of the heating unit side heat pipe portions 28a to merge onto the side of the evaporation unit 22. In addition, corrugated fins 28d are joined between the evaporation side case 25 and the heating unit side heat pipe portions 28a and the evaporation unit side heat pipe portions 28b adjacent thereto, between mutually adjacent heating unit side heat pipe portions 28a, and between mutually adjacent evaporation unit side heat pipe portions 28b, and the corrugated fins 28d promote heat exchange between pure water and exhaust gas by increasing the heat transfer area of the heat pipe 28. Each merging portion 28c is provided arranged in rows at prescribed intervals in respectively roughly the horizontal direction (roughly horizontal direction orthogonal to the axis of the exhaust pipe) near the center of the exhaust pipe 1. In this case, the diagonal lines shown in the heat pipe 28 in FIG 4 indicate liquid phase pure water, while the dots indicate water vapor (vapor phase pure water).

In addition, the upper ends of each group of two each of the heating unit side heat pipe portions 28a are respectively connected to each merging portion 28c on the side of the evaporation unit 22, while the lower end of a single evaporation unit side heat pipe portion 28b is connected to each merging portion 28c on the side of the evaporation unit 22. Each merging portion 28c on the side of the evaporation unit 22 is set to have a flow path cross-sectional area larger than the flow path cross-sectional area of each heating unit side heat pipe portion 28a. In other words, in contrast to the two heating unit side heat pipe portions 28a being arranged intermittently in the horizontal direction orthogonal to the direction of flow of exhaust gas interposed between the corrugated fins 28d, each merging portion 28c is provided continuously extending between the two heating unit side heat pipe portions 28a, and as a result, the flow path cross-sectional area of the merging portions 28c is set to be larger than the total flow path cross-sectional area of each of the two heating unit side heat pipe portions 28a provided intermittently in the horizontal direction orthogonal to the direction of flow of exhaust gas.

On the other hand, each merging portion 28c on the side of the evaporation unit 22 is set to have a flow path cross-sectional area larger than the flow path cross-sectional area of each of the evaporation unit side heat pipe portion 28b. In other words, the flow path cross-sectional area of the merging portion 28c provided continuously extending between two heating unit side heat pipe portions 28a is set to be larger than the flow path cross-sectional area of a single evaporation unit side heat pipe portion 28b connected to the upper end of this merging portion 28c. The total flow path cross-sectional area of the two heating unit side heat pipe portions 28a is set to be twice as large as the flow path cross-sectional area of the single evaporation unit side heat pipe portion 28b.

In this case, the lower ends of each group of two heating unit side heat pipe portions 28a are respectively connected to the intake portion 252 on the lower end of the evaporation side case 25, and the upper ends thereof are connected to the lower ends of the merging portions 28c by extending upward in the vertical direction. On the other hand, the lower end of each evaporation unit side heat pipe portion 28b is respectively connected to the upper end of the merging portion 28c located between a group of two heating unit side heat pipe portions 28a, and the upper end thereof is connected to the lower end of the water vapor layer 251 on the upper end of the evaporation side case 25 by extending upward in the vertical direction. In addition, together with six of the heating unit side heat pipe portions 28a being arranged on the side of the heating unit 21, three evaporation unit side heat pipe portions 28b are arranged on the side of the evaporation unit 22.

Thus, in this second embodiment, the heat pipe 28 retards the flow rate of pure water passing through each of the heating unit side heat pipe portions 28a in each of the merging portions 28c on the side of the evaporation unit 22 by the flow rate retardation means 5 provided with the merging portions 28c merging pure water respectively heated by each group of two heating unit side heat pipe portions 28a on the side of the heating unit 21 to the side of the evaporation unit 22. This is because the flow rate of pure water merged from each heating unit side heat pipe portion 28a is retarded as a result of being retained in each merging portion 28c having a large flow path cross-sectional area since pure water heated two each of the heating unit side heat pipe portions 28a is caused to merge in each merging portion 28c on the side of the evaporation unit 22. Moreover, since the flow path cross-sectional area of each merging portion 28c is set to be larger than the flow path cross-sectional area of a single evaporation unit side heat pipe portion 28b, pure water that has merged from each heating unit side heat pipe portion 28a into each merging portion 28c resists being rapidly introduced into each evaporation unit side heat pipe portion 28b having a small flow path cross-sectional area, thereby causing the flow rate of pure water to temporarily decrease in the merging portions 28c. As a result, the heat of exhaust gas easily acts on pure water for which the flow rate thereof has been retarded in each merging portion 28c on the side of the evaporation unit 22, and water vapor (vapor phase pure water) evaporated in each merging portion 28c on the side of the evaporation unit 22 is adequately reheated by the heat of the exhaust gas, thereby ensuring an adequate amount of heat. As a result, heat exchange with engine cooling water can be carried out efficiently by avoiding the heat of the water vapor being lost directly due to contact with the cold partition 241 and the like of the condensation unit 24, particularly during cold starting when promotion of warming is required.

In addition, since each merging portion 28c of the evaporation unit 22 is provided extending in the horizontal direction near the center of the exhaust pipe 1, the heat of the exhaust gas that reaches the highest temperature near the center of the exhaust pipe 1 can be efficiently imparted to the pure water retained in each merging portion 28c, which is extremely advantageous in terms of improving the efficiency of heat exchange with engine cooling water.

Moreover, since the total flow path cross-sectional area of each of the six heating unit side heat pipe portions 28a is set to be larger than the total flow path cross-sectional area of each of the three evaporation unit side heat pipe portions 28b, the heat of exhaust gas aggressively and effectively acts on liquid phase pure water in each of the heating unit side heat pipe portions 28a due to the large flow path cross-sectional area thereof, thereby making it possible to efficiently heat the liquid phase pure water in each of the heating unit side heat pipe portions 28a.

Furthermore, the invention is not limited to the each of the above-mentioned embodiments, but rather includes various other variations thereof. For example, although the flow path cross-sectional areas of the merging portions 23c and 28c on the side of the evaporation unit 22 is set to be larger than the flow path cross-sectional areas of each of the evaporation unit side heat pipe portions 23b and 28b in each of the embodiments, throttling means may be provided between the merging portion and the evaporation unit side heat pipe portions, namely on the downstream side of the merging portion on the side of the evaporation unit 22 or on the upstream side of each evaporation unit side heat pipe portion, that restricts flow path cross-sectional area. In this case, working fluid that has merged from each heating unit side heat pipe portion into the merging portion further resists being introduced into the evaporation unit side heat pipe portion having a restricted flow path cross-sectional area, and the heat of exhaust gas acts even more reliably on working fluid for which the flow rate thereof has been further decreased in the merging portion.

In addition, although the previously described first embodiment employs a configuration in which each of the evaporation unit side heat pipe portions 23b and each of the heating unit side heat pipe portions 23a are respectively formed to the same diameter, and the number of the evaporation unit side heat pipe portions 23b is one fewer than the number of the heating unit side heat pipe portions 23a, namely six, and therefore the total flow path cross-sectional area of the six evaporation unit side heat pipe portions 23b is set to be smaller than the total flow path cross-sectional area of the seven heating unit side heat pipe portions 23a, if the total flow path cross-sectional area of each of the evaporation unit side heat pipe portions is set to be smaller than the total flow path cross-sectional area of each of the heating unit side heat pipe portions, it is not necessary for each of the evaporation unit side heat pipe portions and each of the heating unit side heat pipe portions to respectively have the same diameter, and the difference in the numbers of evaporation unit side heat pipe portions and heating unit side heat pipe portions is not limited thereto.

In addition, in the previously described second embodiment, although each of the evaporation unit side heat pipe portions 28b and each of the heating unit side heat pipe portions 28a are respectively formed to the same diameter, and the upper ends of each group of two heating unit side heat pipe portions 28a are connected to the lower end of a single evaporation unit side heat pipe portion 28b through the merging portions 28c, and therefore the flow path cross-sectional area of a single evaporation unit side heat pipe portion 28b is set to be roughly half the total flow path cross-sectional area of each group of two heating unit side heat pipe portions 28a, if the total flow path cross-sectional area of the evaporation unit side heat pipe portion is set to be smaller than the total flow path cross-sectional area of the heating unit side heat pipe portions, it is not necessary for each evaporation unit side heat pipe portion and each heating unit side heat pipe portion to be respectively formed to the same diameter, and the difference in the numbers of evaporation unit side heat pipe portions and heating unit side heat pipe portions is not limited thereto.

In addition, although the valve 271 for controlling the return of liquid phase pure water to the reservoir portion 27 is provided in the connection with the lower communication path 26b of the reservoir portion 27 in the embodiments, the location at which this valve is provided is not limited thereto, but rather it may be provided at any location provided the movement of water vapor to the condensation unit is controlled when the valve is closed such as at completion of warming when heat exchange with engine cooling water is no longer necessary in the condensation unit.

In addition, although engine cooling water is applied as the target of heat exchange that carries out heat exchange with exhaust gas in the exhaust heat recoverer 2 in the embodiments, engine oil or transmission oil and the like may also be a target of heat exchange.

Moreover, although pure water is applied as the working fluid in the embodiments, working fluids other then water, such as alcohols or fluorocarbons, may also be applied.

## Claims

1. A heat pipe (23) including;
a heating unit (21) that is provided with a heating unit side heat pipe portion (23a) that heats a working fluid using heat of exhaust gas discharged from an engine; and
an evaporation unit (22) that is provided with an evaporation unit side heat pipe portion (23b) through which the working fluid flows, and that further heats the working fluid heated by the heating unit side heat pipe portion using heat of the exhaust gas, the heating unit side heat pipe portion is provided in plurality;
**characterized by** comprising flow rate retardation means (4) for retarding the flow rate of the working fluid flowing into the evaporation unit side heat pipe portion,
wherein:
the flow rate retardation means is provided with a merging portion (23c) that merges the working fluid respectively heated by the plurality of heating unit side heat pipe portions, on the evaporation unit side.

2. The heat pipe according to claim 1, wherein a flow path cross-sectional area orthogonal to the vertical direction of the merging portion is larger than a flow path cross-sectional area orthogonal to the vertical direction of the plurality of heating unit side heat pipe portions.

3. The heat pipe according to claim 1 or 2, wherein a flow path cross-sectional area orthogonal to the vertical direction of the merging portion is larger than a flow path cross-sectional area orthogonal to the vertical direction of the evaporation unit side heat pipe portion.

4. The heat pipe according to any one of claims 1 to 3, further comprising throttling means which is provided between the merging portion and the evaporation unit side heat pipe portion and which restricts the flow path cross-sectional area orthogonal to the vertical direction.

5. The heat pipe according to any one of claims 1 to 4, wherein the merging portion is provided near the center of an exhaust pipe through which the exhaust gas flows.

6. The heat pipe according to any one of claims 1 to 5, wherein the cross-section of the merging portion orthogonal to the direction of flow of the exhaust gas is in the shape of a semi-circular arc.

7. The heat pipe according to any of claims 1 to 6, wherein the working fluid further heated by the evaporation unit is a vapor phase working fluid.

8. The heat pipe according to any of claims 1 to 7, wherein the evaporation unit is arranged higher than the heating unit in the vertical direction.

9. An exhaust heat recoverer **characterized by** comprising:
the heat pipe according to any one of claims 1 to 8; and
a condensation unit into which is introduced the working fluid further heated by the evaporation unit and in which the introduced working fluid is cooled.

## Patentansprüche

1. Wärmerohr (23), aufweisend:
eine Heizungseinheit (21), die mit einem heizungsseitigen Wärmerohrabschnitt (23a) versehen ist, der ein Arbeitsfluid mittels der Wärme eines Abgases, das aus einem Verbrennungsmotor ausgetragen wird, erwärmt; und
eine Verdampfungseinheit (22), die mit einem verdampfungsseitigen Wärmerohrabschnitt (23b) versehen ist, durch den das Arbeitsfluid strömt, und der das Arbeitsfluid, das vom heizungsseitigen Wärmerohrabschnitt mittels der Wärme des Abgases erwärmt wurde, noch weiter erwärmt, wobei der heizungsseitige Wärmerohrabschnitt mehrfach vorhanden ist;
**dadurch gekennzeichnet, dass** es ein Strömungsraten-Retardierungsmittel (4) aufweist zum Herabsetzen der Strömungsrate des Arbeitsfluids, das in den verdampfungsseitigen Wärmerohrabschnitt strömt,
wobei:
das Strömungsraten-Retardierungsmittel mit einem Vereinigungsabschnitt (23c) versehen ist, der das Arbeitsfluid, das jeweils von den in Vielzahl vorhandenen heizungsseitigen Wärmerohrabschnitten erwärmt wurde, auf der Verdampfungsseite zusammenführt.

2. Wärmerohr nach Anspruch 1, wobei eine Querschnittsfläche eines Strömungswegs des Vereinigungsabschnitts orthogonal zur vertikalen Richtung größer ist als eine Querschnittsfläche eines Strömungswegs der Vielzahl von heizungsseitigen Wärmerohrabschnitten orthogonal zur vertikalen Richtung.

3. Wärmerohr nach Anspruch 1 oder 2, wobei eine Querschnittsfläche eines Strömungswegs des Vereinigungsabschnitts orthogonal zur vertikalen Richtung größer ist als eine Querschnittsfläche eines Strömungswegs des verdampfungsseitigen Wärmerohrabschnitts orthogonal zur vertikalen Richtung.

4. Wärmerohr nach einem der Ansprüche 1 bis 3, ferner ein Drosselungsmittel aufweisend, das zwischen dem Vereinigungsabschnitt und dem verdampfungsseitigen Wärmerohrabschnitt vorgesehen ist und das die Querschnittsfläche des Strömungswegs orthogonal zur vertikalen Richtung begrenzt.

5. Wärmerohr nach einem der Ansprüche 1 bis 4, wobei der Vereinigungsabschnitt in der Nähe der Mitte eines Abgasrohrs, durch welches das Abgas strömt, vorgesehen ist.

6. Wärmerohr nach einem der Ansprüche 1 bis 5, wobei der Querschnitt des Vereinigungsabschnitts orthogonal zur Strömungsrichtung des Abgases die Form eines Halbkreisbogens aufweist.

7. Wärmerohr nach einem der Ansprüche 1 bis 6, wobei das Arbeitsfluid, das von der Verdampfungseinheit weiter erwärmt wird, ein Dampfphasen-Arbeitsfluid ist.

8. Wärmerohr nach einem der Ansprüche 1 bis 7, wobei die Verdampfungseinheit in der vertikalen Richtung weiter oben angeordnet ist als die Heizungseinheit.

9. Abgaswärme-Rückgewinnungsanlage, **dadurch gekennzeichnet, dass** sie aufweist:
das Wärmerohr nach einem der Ansprüche 1 bis 8; und
eine Kondensatoreinheit, in die das Arbeitsfluid, das von der Verdampfungseinheit weiter erwärmt wurde, eingeführt wird, und in der das eingeführte Arbeitsfluid gekühlt wird.

## Revendications

1. Caloduc (23) comprenant :
une unité de chauffage (21) qui est prévue avec une partie de caloduc du côté de l'unité de chauffage (23a) qui chauffe un fluide de travail en utilisant la chaleur des gaz d'échappement déchargés d'un moteur ; et
une unité d'évaporation (22) qui est prévue avec une partie de caloduc du côté de l'unité d'évaporation (23b) à travers laquelle le fluide de travail s'écoule, et qui chauffe en outre le fluide de travail chauffé par la partie de caloduc du côté de l'unité de chauffage en utilisant la chaleur des gaz d'échappement, la partie de caloduc du côté de l'unité de chauffage est prévue en pluralité ;
**caractérisé en ce qu'**il comprend des moyens de retard de débit (4) pour retarder le débit du fluide de travail s'écoulant dans la partie de caloduc du côté de l'unité d'évaporation,
dans lequel :
les moyens de retard de débit sont prévus avec une partie de convergence (23c) qui fait converger le fluide de travail respectivement chauffé par la pluralité de parties de caloduc du côté de l'unité de chauffage, du côté de l'unité d'évaporation.

2. Caloduc selon la revendication 1, dans lequel une surface transversale de trajectoire d'écoulement orthogonale à la direction verticale de la partie de convergence est plus grande qu'une surface transversale de trajectoire d'écoulement orthogonale à la direction verticale de la pluralité de parties de caloduc du côté de l'unité de chauffage.

3. Caloduc selon la revendication 1 ou 2, dans lequel une surface transversale de trajectoire d'écoulement orthogonale à la direction verticale de la partie de convergence est plus grande qu'une surface transversale de trajectoire d'écoulement orthogonale à la direction verticale de la partie de caloduc du côté de l'unité d'évaporation.

4. Caloduc selon l'une quelconque des revendications 1 à 3, comprenant en outre des moyens d'étranglement qui sont prévus entre la partie de convergence et la partie de caloduc du côté de l'unité d'évaporation et qui limitent la surface transversale de trajectoire d'écoulement orthogonale à la direction verticale.

5. Caloduc selon l'une quelconque des revendications 1 à 4, dans lequel la partie de convergence est prévue à proximité du centre d'un tuyau d'échappement à travers lequel les gaz d'échappement s'écoulent.

6. Caloduc selon l'une quelconque des revendications 1 à 5, dans lequel la section transversale de la partie de convergence orthogonale à la direction d'écoulement des gaz d'échappement se présente sous la forme d'un arc semi-circulaire.

7. Caloduc selon l'une quelconque des revendications 1 à 6, dans lequel le fluide de travail chauffé en outre par l'unité d'évaporation est un fluide de travail en phase vapeur.

8. Caloduc selon l'une quelconque des revendications 1 à 7, dans lequel l'unité d'évaporation est plus haute que l'unité de chauffage dans la direction verticale.

9. Récupérateur de chaleur d'échappement, **caractérisé en ce qu'**il comprend :
le caloduc selon l'une quelconque des revendications 1 à 8 ; et
une unité de condensation dans laquelle est introduit le fluide de travail chauffé en outre par l'unité d'évaporation et dans laquelle le fluide de travail introduit est refroidi.
